# EUROPÄISCHE PATENTSCHRIFT

(11) **EP 0 628 517 B1**
(45) Veröffentlichungstag und Bekanntmachung des Hinweises auf die Patenterteilung: **25.09.1996**
(21) Anmeldenummer: 94107589.7
(22) Anmeldetag: 17.05.1994
(51) Int. Cl.: C02F 3/12, C02F 3/00

(54) **Biologische Klärvorrichtung**
Biological clarification device
Dispositif de clarification biologique

(30) Priorität: 01.06.1993 DE 4318146
(43) Veröffentlichungstag der Anmeldung: 14.12.1994
(73) Patentinhaber: HANDELSONDERNEMING G. MOURIK, NL-2559 BS Streefkerk (NL)
(72) Erfinder: Mourik, Gerrit, NL-2559 BS Streefkerk (NL)
(74) Vertreter: Rauh, Wolfgang K., Dipl.-Ing. Patentanwalt

(56) Entgegenhaltungen:
- DE-A- 3 327 560
- US-A- 4 092 249
- US-A- 4 895 645
- US-A- 5 269 911

## Beschreibung

Die Erfindung betrifft eine biologische Klärvorrichtung für Abwässer, insbesondere Haushaltabwässer.

Es sind Klärvorrichtungen bekannt, die für Einzelhäuser, Wohnblocks oder öffentliche Gebäude, z.B. Schulen vorgesehen sind. Diese bestehen aus mehreren, miteinander durch Überläufe verbundenen Behältern, in denen anaerobe und aerobe Bakterien auf geeigneten Füllstoffen angesiedelt sind und zur Klärung des Abwassers beitragen. Das so geklärte Wasser wird mehrmals mittels einer zeitlich gesteuerten Pumpeinrichtung teilweise in den Vorklärbehälter, teilweise in den Nachklärbehälter und in den Auslauf geführt. Hierfür werden jeweils zeitlich gesteuerte Pumpen verwendet. Die bekannte Vorrichtung erfordert demgemäß einen großen Aufwand an Pumpen, Installationen, Steuerungsmittel für die Pumpen und Wartungsaufwand.

Der vorliegenden Erfindung liegt die Aufgabe zugrunde, eine Klärvorrichtung dieser Art so auszubilden, daß sie einfacher in ihrem Aufbau und sparsamer in ihrem Betrieb ist.

Die Lösung der gestellten Aufgabe ergibt sich aus den kennzeichnenden Merkmalen des Anspruches 1.

Da bei stoßweiser Belastung der Klärvorrichtung eine ungleichförmige Klärung erfolgt, insbesondere jeweils zu Anfang der Klärung ist es üblich, das geklärte Wasser zumindest teilweise einer mehrfachen Klärung zu unterziehen und es jeweils zurückzuführen. Dies erfolgt meist mittels Zeitschalteinrichtungen.

Bei der erfindungsgemäßen Vorrichtung wird das geklärte Wasser, soweit es nicht abgegeben wird, grundsätzlich wieder in die Vorklärung geleitet und einem vollständigen Klärvorgang unterzogen. Damit wird eine Pumpleitung zum Nachklärbehälter gespart und eine intensivere Klärung sichergestellt. Eine weitere Pumpe wird durch den Einbau des Steuerventils eingespart. Die neue Vorrichtung erfordert damit geringere Installations-, Betriebs- und Wartungskosten. Auch kann der Pumpenschacht relativ klein ausgelegt werden.

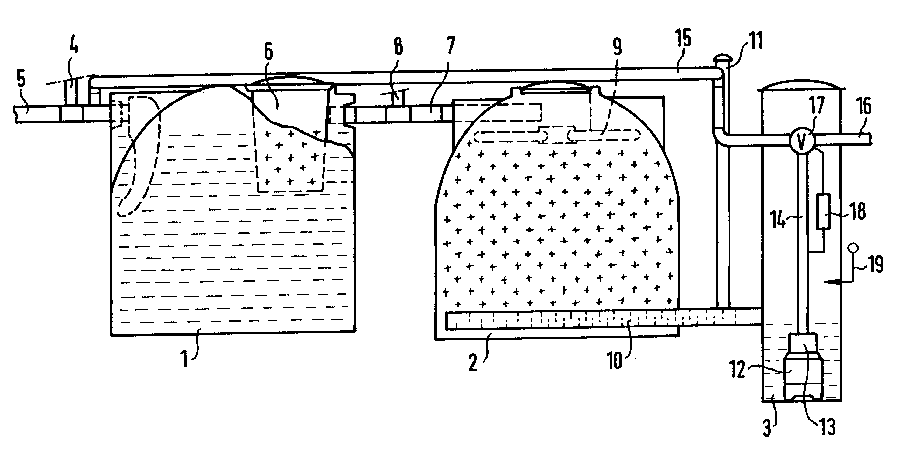

Nachstehend ist die Erfindung anhand eines in der Zeichnung dargestellten Ausführungsbeispieles näher erläutert.

Die Zeichnung zeigt eine biologische Klärvorrichtung nach der Erfindung. Sie besteht im wesentlichen aus je einem Vor- und Nachklärbehälter 1 und 2 und einem Pumpenschacht 3 mit einer Pumpeinrichtung.

In den Vorklärbehälter 1 mündet eine mit einer Entlüftung 4 versehene Einlaufleitung 5 für Abwasser, insbesondere Haushaltabwasser. Dies ist häusliches Schmutzwasser aus Toiletten, Badezimmern, Küchen und dgl. In den oberen Teil des Vorklärbehälters 1 ragt ein Vorfilter 6, der mit Vulkangestein, z.B. Puzzolan oder dgl. gefüllt ist. Der Vorklärbehälter 1 ist gegen Sauerstoffzufuhr weitgehend abgeschlossen und enthält anaerobe Bakterien. Der Vorfilter 6 weist ein Überlaufrohr 7 auf, das mit einer Entlüftung 8 versehen ist und in den Nachklärbehälter 2 mündet.

Der Nachklärbehältzer 2 ist ebenfalls mit Vulkangestein gefüllt. Auf diesem sind aerobe Bakterien angesiedelt. Im oberen Teil des Nachklärbehälters ist ein sternförmiger Verteiler 9 an den Auslauf des Überlaufrohres 7 angeschlossen.

Am Boden des Nachklärbehälters 2 ist eine Ablaufleitung 10 für geklärtes Wasser angeordnet, die mit einer Belüftung 11 versehen ist und in den Pumpenschacht 3 mündet. Dieser ist mit einer Pumpeinrichtung 12 versehen, die im einzelnen aus einer einzigen Pumpe 13, vorteilhaft als Tauchpumpe ausgebildet, und einer Druckleitung 14 besteht. An die Druckleitung 14 sind über ein Steuerventil 17 eine Rückführleitung 15 und eine Auslaufleitung 16 angeschlossen. Dieses kann entweder von einer (nicht dargestellten ) Zeitschalteinrichtung oder einer auf die physikalischen oder chemischen Eigenschaften des geklärten Wassers ansprechenden Sensor gesteuert sein.

Ferner ist der Pumpenschacht mit einem Niveaufühler 19 versehen, der mit der Pumpe und ggf. dem Steuerventil sowie ggf. einer Warneinrichtung verbunden ist.

Das Abwasser gelangt über die Einlaufleitung 5 in den Vorklärbehälter 1. Hier erfolgt die mechanische Trennung in Flüssigkeit und Feststoffe, wobei die leichteren Feststoffe aufschwimmen. Im Behälter erfolgt eine natürliche Gärung. Enzyme und anaerobe Bakterien wandeln die schweren Feststoffe in wasserlösliche Stoffe um. Hierdurch wird der Bodensatz abgebaut.

Der Vorfilter 6 nimmt die ungelösten Feststoffe auf und sichert den Vorklärbehälter 1 gegen mangelnde Wartung. Durch Überlauf gelangt das vorgeklärte Wasser über den Verteiler 9 in den Nachklärbehälter 2. Dort rieselt es über das Vulkangestein, das mit aeroben Bakterien besiedelt ist. Dabei erfolgt eine Oxidation des Wassers, das zugleich gereinigt wird.

Das geklärte Wasser gelangt dann in den Pumpenschacht 3 und wird von dort in die Druckleitung 14 gefördert.

Da insbesondere beim Anlaufen der Reinigung oder bei schubförmiger Zufuhr die Klärung nicht immer mit Sicherheit den geforderten Bedingungen gerecht sein kann, ist vorgesehen, das gereinigte Wasser mehrmals zumindest teilweise erneut in die Klärvorrichtung einzuspeisen. Dies erfolgt mittels des Steuerventils 17, das die Menge an Rückführflüssigkeit bestimmt. Hierzu kann eine bestimmte Ventilöffnung vorgesehen sein. Auch kann das Steuerventil an eine Zeitschalteinrichtung angeschlossen sein. Schließlich ist es möglich, das Steuerventil mit einer Einrichtung 18 zu steuern, die die physikalische oder chemische Qualität des Wassers mißt.

## Patentansprüche

1. Biologische Klärvorrichtung für Abwässer, insbesondere Haushaltabwässer,
bestehend aus jeweils mindestens einem Vorklärbehälter und einem Nachklärbehälter sowie einem nachgeordneten Pumpenschacht mit Pumpeinrichtung für die teilweise Rückführung und die Abgabe des geklärten Wassers,
**dadurch gekennzeichnet**,
daß vom Pumpenschacht (3) eine einzige Rückführleitung (15) zum (ersten) Vorklärbehälter (1) vorgesehen und an die Druckleitung (14) einer einzigen Pumpe (13) angeschlossen ist und
daß diese Druckleitung (14) ein Steuerventil (17) aufweist, dessen einer Ausgang mit der Rückführleitung (15) und dessen anderer Ausgang mit einer Auslaufleitung (16) verbunden sind.

2. Vorrichtung nach Anspruch 1, **dadurch gekennzeichnet**, daß das Steuerventil (17) mit einer Zeitschalteinrichtung verbunden ist.

3. Vorrichtung nach Anspruch 1, **dadurch gekennzeichnet**, daß das Steuerventil (17) mit einer auf physikalische und/oder chemische Werte des gereinigten Wassers ansprechenden Steuereinrichtung (18) verbunden ist.

4. Vorrichtung nach einem der Ansprüche 1 bis 3, **dadurch gekennzeichnet**, daß die Pumpeinrichtung (12) und/oder ggf. vorgesehene Warneinrichtungen (19) mit einem im Pumpenschacht (3) angeordneten Niveaufühler (19) verbunden sind.

## Claims

1. Biological clarifying apparatus for clarifying waste water, more especially domestic waste water, comprising at least one pre-clarifying tank and one post-clarifying tank, as well as a subsequent pump shaft having a pumping means for the partial return and for the delivery of the clarified water, characterised in that a single return line (15) is provided from the pump shaft (3) to the (first) pre-clarifying tank (1) and communicates with the pressure line (14) of a single pump (13), and in that this pressure line (14) includes a control valve (17), one outlet of which is connected to the return line (15) and the other outlet of which is connected to a discharge line (16).

2. Apparatus according to claim 1, characterised in that the control valve (17) is connected to a timer.

3. Apparatus according to claim 1, characterised in that the control valve (17) is connected to a control means (18), which responds to physical and/or chemical values of the purified water.

4. Apparatus according to one of claims 1 to 3, characterised in that the pumping means (12) and/or any warning means (19) which may be provided are connected to a level sensor (19) disposed in the pump shaft (3).

## Revendications

1. Dispositif d'épuration biologique pour des eaux usées, en particulier des eaux usées domestiques, constitué, à chaque fois, d'au moins un récipient d'épuration préalable et d'un récipient d'épuration ultérieure, ainsi que d'une cuve agencée en aval comportant un dispositif de pompage pour le retour partiel et l'évacuation des eaux purifiées,
caractérisé en ce que, de la cuve (3), il est prévu un conduit de retour unique (15) vers le (premier) récipient de purification préalable (1), lequel conduit (15) est raccordé au conduit de pression (14) d'une pompe unique (13), et en ce que ce conduit de pression (14) présente une valve de commande (17) dont une sortie est reliée au conduit de retour (15) et dont l'autre sortie est reliée à un conduit d'évacuation (16).

2. Dispositif selon la revendication 1,
caractérisé en ce que la valve de commande (17) est reliée à un dispositif de commutation temporel.

3. Dispositif selon la revendication 1,
caractérisé en ce que la valve de commande (17) est reliée à un dispositif de commande (18) sensible à des valeurs physiques et/ou chimiques de l'eau purifiée.

4. Dispositif selon une des revendications 1 à 3,
caractérisé en ce que le dispositif de pompage (12) et/ou des dispositifs d'alarme (19), prévus le cas échéant, sont reliés à un capteur de niveau (19) agencé dans la cuve (3).
